**Europäisches Patentamt**

**European Patent Office**

**Office européen des brevets**

(11) Veröffentlichungsnummer: **0 274 552**
**B1**

(12) **EUROPÄISCHE PATENTSCHRIFT**

(45) Veröffentlichungstag der Patentschrift:
**30.05.90**

(21) Anmeldenummer: **87100283.8**

(22) Anmeldetag: **10.01.87**

(51) Int. Cl.⁵: **E05D 7/10, H02B 1/26, E05D 5/06**

(54) **Aussen sichtbares 180-Grad-Scharnier.**

(43) Veröffentlichungstag der Anmeldung:
**20.07.88 Patentblatt 88/29**

(45) Bekanntmachung des Hinweises auf die Patenterteilung:
**30.05.90 Patentblatt 90/22**

(84) Benannte Vertragsstaaten:
**DE FR GB IT SE**

(56) Entgegenhaltungen:
EP-A- 0 222 031
DE-A- 3 246 398
FR-A- 2 576 959
GB-A- 374 310
SE-A- 164 950
US-A- 1 410 840
US-A- 1 528 752
US-A- 2 137 529
US-A- 2 578 610
US-A- 2 677 147
US-A- 3 921 225
US-A- 4 630 332

**Katalogblätter C085.2 und C 085.4 der Firma EMKA
Beschlagteile GmbH & Co. KG, Velbert (DE), März 1986**

(73) Patentinhaber: **Ramsauer, Dieter, Am
Neuhauskothen 20, D-5620 Velbert 11(DE)**

(72) Erfinder: **Ramsauer, Dieter, Am Neuhauskothen 20,
D-5620 Velbert 11(DE)**

(74) Vertreter: **Stratmann, Ernst, Dr.-Ing., Schadowplatz 9,
D-4000 Düsseldorf 1(DE)**

**Beschreibung**

Die Erfindung betrifft ein außen sichtbares 180°-Scharnier für Schaltschränke, bestehend aus einem ersten, am Schrankgehäuse befestigten Lagerbock und einem zweiten, den ersten Lagerbock umgreifenden, U-förmigen, zwei U-Schenkel aufweisen den, am Türblatt verschraubten oder mittels einer Klemmstifteinrichtung befestigten Lagerbock, wobei der zweite Lagerbock in eine im Abkantbereich des Türblatts angebrachten Ausklinkung eingeschoben ist und dabei die Ausklinkungskanten umschließt, und wobei die durch einen Lagerbolzen gebildete Drehachse des Scharniers außerhalb des von der Abkantung des Türblatts gebildeten Eckbereichs liegt.

Ein derartiges auf den Anmelder des vorliegenden Scharniers zurückgehende 180°-Scharnier, das auch bei Reihenschränken anwendbar ist, ist aus dem Katalogblatt C085,4 der Fa. EMKA Beschlagteile GmbH & Co. KG, gedruckt im März 1986, bekannt. Dieses 180°-Scharnier ist für aufliegende Türen geeignet und rechts und links einsetzbar, und der maximale Öffnungswinkel ist auch bei Anwendung für Reihenschränke 180°, so daß eine außerordentlich leichte Zugänglichkeit für den Inhalt des Schaltschrankes wie auch für an dem Türblatt ggf. befestigte Bauteile gegeben ist.

Das bekannte EMKA-Scharnier weist gegenüber früheren Konstruktionen bereits erhebliche Vorteile auf. Ein Vorteil liegt darin, daß ein Schweißvorgang zur Befestigung des zweiten Lagerbockes am Türblatt oder ggf. auch der Einsatz von Befestigungsschrauben für das Türblatt (wenn dieses auch alternativ vorgesehen ist) entfallen kann, während bei der Befestigung des ersten Bockes entweder mit einer Kopfschraube oder mit einem Schraubbolzen oder gar Stehbolzen (Schweißbolzen) gearbeitet werden kann.

Einen ähnlichen mittels einer Ausklinkung in einem Türblatt festgehaltenen U-förmigen Bock zeigt auch die Fig. 7 der europäischen Patentanmeldung 85114300.8 (EP-A 0 222 031).

Bei den bekannten 180°-Scharnieranordnungen mit Klemmstifteinrichtung muß allerdings zur Entfernung der Tür, beispielsweise, um an die Innereien des Schaltschrankes zur Schrankverdrahtung besser heranzukommen, recht umständlich gearbeitet werden. Entweder müssen die Schraubverbindungen zwischen Schrankgehäuse und den mehreren Scharnieren der jeweiligen Tür abgeschraubt werden, was recht zeitaufwendig ist, oder aber die Bolzen der Klemmstifteinrichtung der verschiedenen Scharniere werden herausgezogen, was aber wiederum dazu führt, daß die Scharniere auseinanderfallen. Der anschließende Zusammenbau wird dann sehr schwierig, insbesondere dann, wenn z. B. drei Scharniere gleichzeitig montiert werden müssen, und zwar wegen der dabei notwendigen genauen Ausrichtung der einzelnen Scharnierteile.

Ein noch gravierenderer Nachteil ist aber, daß der ältere Stand der Technik nur bei Einzelschränken anwendbar ist, nicht dagegen bei Reihenschränken.

Scharniere für einen Türöffnungswinkel von 180°, die auch bei Reihenschränken eingesetzt werden können, sind aus der DE-OS 32 46 398 des Anmelders bekannt, wobei die in dieser Druckschrift dargestellte Reihenschrankscharnieranordnung allerdings Platz neben dem Türblatt benötigt, entsprechend der Grundbreite der beiden Scharnierböcke. Aus diesem Grunde muß bei der Anwendung eines derartig ausgestalteten 180°-Scharniers für Reihenschränke das Türblatt um etwas mehr als die Grundbreite des Scharniers schmaler sein als der Schrankkörper, wobei aus optischen Gründen dieser Abstand auch auf der scharnierabgewandten Türblattseite sowie auch oben und unten am Türblatt vorgesehen wurde. Dieses Scharnier erfordert auch unsymmetrische Befestigungsbohrungen, so daß ein vorbereitetes, d. h., gelochtes Tirblatt nicht rechts und links verwendet werden kann, es sei denn, es sind Zusatzbohrungen vorhanden. Viel günstiger wäre es, wenn bei einem 180°-Scharnier das Türblatt im wesentlichen flächendeckend bezüglich des Schrankkörpers ist, so daß lediglich ein schmaler Rand von beispielsweise 1 bis 3 mm zur Aufnahme von Fertigungstoleranzen verbleibt. Das aus dem eingangs genannten Katalogblatt bekannte 180°-Scharnier erlaubt diese flächendeckende Größe des Türblattes und ist trotzdem auch bei Reihenschränken anwendbar. Zudem kann bei Bedarf die Befestigung am Türblatt ohne Anbringung von Schraublöchern erfolgen. Auch eine Auswechslung der Scharnierart (z. B. Ersatz eines 180°-Scharniers für Einzelschränke, wie es beispielsweise in dem Katalogblatt C085.2 dargestellt wird, durch ein 180°-Scharnier für Reihenschränke gemäß dem Katalogblatt C085.4) ist möglich, ohne daß am Türblatt oder am Schrankgehäuse irgendwelche Änderungen vorgenommen werden müssen, wobei zudem die Rechts/Links-Verwendbarkeit erhalten bleibt.

Aufgabe der vorliegenden Erfindung ist es, dieses an sich bereits sehr vorteilhafte 180°-Scharnier der eingangs genannten Art noch weiter zu verbessern. Ein Nachteil dieses Scharniers liegt nämlich noch darin, daß zwar das Türblatt aushängbar ist, jedoch dazu bei allen am Türblatt vorhandenen Scharnieren der jeweilige Klemmstift herausgezogen werden muß. Es gibt nämlich Anwendungsfälle, bei denen mehrere nebeneinanderstehende Schaltschränke gleichzeitig in ihrem Inneren zugänglich sein müssen, um Verdrahtungsarbeiten rationell ausführen zu können. Hier ist es von Vorteil, wenn die Schaltschranktür in möglichst einfacher Weise demontierbar und später wieder montierbar ist, ohne daß dazu ein Stift herausgezogen und anschließend zur Montage der Tür wieder eingesetzt werden müßte. Insbesondere das Einsetzen des Stiftes kann zu Problemen führen, z. B. dann, wenn auf der Innenseite des Türblattes umfangreichere Schalteinrichtungen vorgesehen sind, die die Zugänglichkeit des Scharnierbereiches beeinträchtigen.

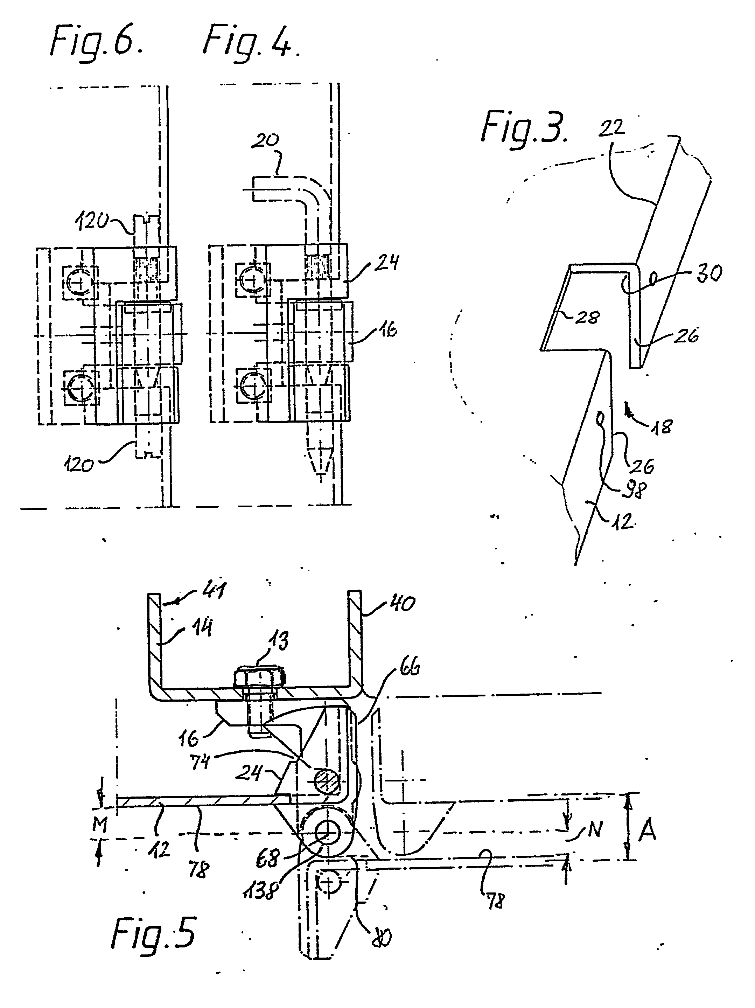

Das Scharnier der eingangs genannten Art sollte daher insoweit verbessert und weitergebildet werden, daß ohne Demontage eines Stiftes die Tür ausgehängt werden kann, wobei trotzdem die Scharniereinrichtung so ausgeführt sein sollte, daß im geschlossenen Zustand der Tür eine axiale Fixierung sich ergibt. Nach Möglichkeit sollte das Scharnier in einer Stellung aushängbar sein, bei der das Scharnier gut einblickbar ist, um so bei der erneuten Montage eine Vorfixierung zu erleichtern. Gegenüber dem aus dem Katalogblatt C085.4 bekannten Scharnier sollte das äußere Aussehen möglichst nicht verschlechtert sein, des weiteren sollte die Möglichkeit bestehen, bei Bedarf statt der Klemmstiftbefestigung auch eine Schraubbefestigung am Türblatt einzusetzen, wie sie beispielsweise in ähnlicher Weise in der Fig. 3 der bereits erwähnten europäischen Patentanmeldung 85114300.8 gezeigt wird.

Statt des Klemmstiftes sollte außerdem die Verwendung von entsprechenden Klemmschrauben möglich sein.

Gelöst wird die Aufgabe dadurch, daß der eine U-Schenkel des U-förmigen zweiten Lagerbocks derart verkürzt ist, daß sein Ende den vom anderen U-Schenkel gehaltenen Lagerbolzen über einen bestimmten Drehwinkel mit konstantem oder veränderlichem Radialabstand zum Lagerbolzen umschließt, und daß der erste Lagerbock im Bereich seines Lagerauges einen den Lagerbolzen ringförmig umschließenden, in dem Radialabstand angeordneten Ansatz bildet. Durch diese Maßnahmen wird eine Gestaltung ermöglicht, die in einem bestimmten Türöffnungswinkelbereich ein einfaches Aushängen des einen Scharnierteils aus dem anderen Scharnierteil ermöglicht, ohne daß dazu irgendwelche Stifte herausgezogen oder sonstige Teile vom Schrankkorpus oder vom Türblatt demontiert werden müßten. Dabei werden alle Vorteile des aus dem Katalogblatt C085.4 bekannten Scharniers erhalten.

Gemäß einer Weiterbildung der Erfindung weist der erste Lagerbock im Bereich seines Lagerauges einen Querschnitt auf, der in einer bestimmten, einer geöffneten Tür entsprechenden Schwenkstellung bezüglich des zweiten Lagerbockes ein Hindurchschieben dieses Querschnitts durch den vom ggf. in Schwenkrichtung veränderlichen Radialabstand gebildeten Raum erlaubt. Diese bestimmte Schwenkstellung könnte einem Türöffnungswinkel von nahezu 180°, vorzugsweise 150... 190°, insbesondere 170... 180° entsprechen, oder aber, meist noch günstiger, einem Türöffnungswinkel von nahe 100°, vorzugsweise 80 bis 120°, insbesondere 90 bis 100°.

Meist wird es günstig sein, wenn der verkürzte U-Schenkel des Lagerbockes der bei fertiger Montage untere Schenkel ist, weil dann die Tür in allen Stellungen ohne zusätzliche Fixierung des Lagerstiftes stabil im Scharnier hängen bleibt. Als besonders günstig hat es sich erwiesen, wenn der Lagerbolzen in einer Durchgangsbohrung oder einer Sackbohrung des unverkürzten U-Schenkels des zweiten Lagerbockes mit Presspassung gehalten ist und an seinem freien Ende kegelstumpfförmig ausläuft. Durch letzteres Merkmal wird das Einhängen noch weiter erleichtert. Eine Erleichterung des Einhängens durch Vorfixierung wird insbesondere auch dann erreicht, wenn gemäß einer weiteren Ausführungsform der Lagerbolzen eine solche Länge besitzt, daß er mit seinem freien Ende noch innerhalb des verkürzten U-Schenkelbereiches endet und dadurch eine Vorfixierungsfläche freiläßt.

Um die Reibung des Lagers zu verringern, kann gemäß einer noch anderen Ausführungsform der erste Lagerbock im Auflagebereich seines das Lagerauge aufweisenden Ansatzes eine ringförmige Einsenkung zur Aufnahme eines Gleitringes, wie Kunstoffringes, aufweisen.

Der Lagerbolzen kann jedoch auch vom ersten Bock ausgehen und dann eine solche Länge aufweisen, daß beim Eindringen seiner Spitze in das zugehörige (obere) Lagerauge des zweiten Lagerbockes der Querschnitt des ersten Lagerbockes bereits teilweise im Radialabstand des zweiten Lagerbockes sich befindet.

Das insoweit gekennzeichnete 180° -Scharnier weist seine Vorteile auch bei Einzelschränken auf, besonders gravierend werden diese Vorteile aber bei Reihenschrankanwendung, in welchem Falle es von besonderem Vorteil ist, wenn die Drehachse des Scharniers derart außerhalb des von der Abkantung des Türblatts gebildeten Eckbereiches liegt, daß der Scharnierlagerbolzen um ein Maß M vor der Türblattaußenfläche liegt, welches der Entfernung N zwischen dem Lagerbolzenmittelpunkt und der parallel zur Türblattaußenfläche liegenden Tangente an das am weitesten vorspringende Lagerteil entspricht.

In diesem Falle ist es auch günstig, wenn das 180°-Scharnier, sofern die Scharnierböcke eine Stellbreite B besitzen, die erheblich größer, insbesondere doppelt so groß wie der Durchmesser D des Scharnierbolzens ist, das Maß M kleiner ist als die halbe Stellbreite B.

Insbesondere aus optischen Gründen ist es günstig, vom gemäß einer noch anderen Ausführungsform der erste Lagerbock einen das freie Ende des Lagerbolzens umschließenden Fortsatz bildet, der in Betriebsstellung der Scharnierteile den durch die Verkürzung des verkürzten U-Schenkels des zweiten Bockes freigebliebenen Raum im wesentlichen ausfüllt.

Der zweite Lagerbock kann mittels durch das Blech des Türblattes hindurchgeführter Kopfschrauben in der Ausklinkung befestigt sein, oder es ist eine das Scharnier durchdringende Klemmstifteinrichtung vorgesehen, die sich über den Ausklinkungsbereichen hinaus in die von der Abkantung gebildeten Eckbereiche hineinerstreckt und dadurch den zweiten Bock in der Ausklinkung festhält, wobei als Klemmstifteinrichtung zwei Stiftschrauben vorgesehen sind, die in mit Gewinde versehene Bohrungen in den U-Schenkeln des zweiten Lagerbockes eingeschraubt sind.

Diese Scharnierausführungsform ist für Reihenschränke besonders günstig, wenn die Scharnierachse von einem ersten Lagerstift gebildet wird, der entsprechende koaxiale Bohrungen im ersten Lagerbock und in dem einen den ersten Lagerbock umgreifenden Schenkel des zweiten Lagerbocks durchdringt (während der andere Schenkel durch seine Verkürzung eine derartige Bohrung nicht benötigt), und die Klemmstifteinrichtung von den zwei Schrauben, insbesondere Stiftschrauben gebildet wird, die in den Schenkeln des zweiten Lagerbocks angebrachten Gewindebohrungen eingeschraubt sind. Stiftschrauben ergeben eine besonders hohe Rüttelfestigkeit, weil sie durch entsprechende Gewindegestaltung in der Gewindebohrung sich verklemmen lassen. Ein weiterer Vorteil der Anordnung der Stiftschrauben anstelle eines durchgehenden Klemmstiftes ist auch noch der, als der von dem zweiten Bock umgriffene erste Bock sich um eine Lagerachse dreht, die mit der Achse der Klemmstifteinrichtung nicht übereinstimmt. Der erste Lagerbock muß daher, falls der Klemmstift durch ihn hindurchtritt, so ausgestaltet werden, daß eine Verschwenkung um den Lagerstift nicht behindert wird. Bei Verwendung von Stiftschrauben ist eine besondere Ausgestaltung des ersten Lagerbockes, bei der dieser eine derart seitlich geöffnete Bohrung für die Klemmstifteinrichtung aufweist, daß ein Herausschwenken des Klemmstiftes aus dem Bereich des ersten Lagerbockes zum Öffnen der Tür möglich wird, nicht erforderlich.

Die Lagerstifte, sofern sie nicht zu anderen Demontagezwecken ausziehbar gehalten werden sollen, können an einem Ende eine Riffelung zur Bildung einer Presspassung mit dem entsprechenden Bohrungsbereich des zweiten Bockes erhalten. Auf diese Weise wird auf einfache Weise sichergestellt, daß der Lagerstift nicht ungewollt aus dem Lager herausfällt. Dieses Merkmal vereinfacht auch sehr stark die Anfangsmontage des Scharniers.

Zur weiteren Vereinfachung der Anfangsmontage, insbesondere aber auch des Auswechselns der Scharnierart durch eine andere, kann der zweite U-förmige Bock zum Umschließen der senkrechten Türblattausklinkungskante im Stegbereich des U eine erste Nut bilden, wie auch beim Katalogblatt C085.4 vorgesehen. Durch Benutzung einer zweiten Nut oder Anschlagsfläche im Schenkelbereich des ein U bildenden zweiten Bockes zum Umschließen der waagerechten Türblattausklinkungen verankert sich der zweite Bock in der Türblattausklinkung bei entsprechender enger Passung der Nut bezüglich der Türblattstärke derart, daß noch vor dem Einschieben der Klemmstifteinrichtung der zweite Bock in der Ausklinkung stecken bleibt und dadurch das anschließende Befestigen beispielsweise mittels Stiftschraube, Klemmstift oder auch Senkkopfschraube, erleichtert wird. Der Halt des zweiten Bockes in der Türblattausklinkung wird noch weiter verbessert, wenn die eine Seite der zweiten Nut von dem stumpfen Ende eines in Aufschiebrichtung ansteigenden Keils gebildet wird. Durch diese Maßnahme entfällt die Notwendigkeit, die Nut mit einer genauen, engen Presspassung bezüglich des Türblattbleches auszustatten, weil sich durch die keilförmigen Vorsprünge eine klippartige Anordnung ergibt, die eine sehr stabile Befestigung des zweiten Bockes in der Ausklinkung ergibt, selbst dann, wenn die Türblattausklinkungskante in der jeweiligen Nut noch etwas Spiel hat.

Der erste Lagerbock kann ein Blechstanzteil sein, bei dem die Lagerbohrung durch eine Blechrolle und die Befestigungsfläche des Lagerbockes von einer Blechabwinkelung gebildet wird, in die ein Gewinde eingeschnitten oder eingepreßt ist oder die einen in eine entsprechende ggf. mit Gewinde versehene Bohrung versehenen Gewindebolzen trägt. Der zugehörige zweite Lagerbock könnte dann aus Kunststoff gespritzt sein.

Gemäß einer noch anderen Ausführungsform der Erfindung weist der erste Lagerbock einen Fuß auf, der am Schrankkorpus mittels einer Befestigungseinrichtung befestigbar ist, deren Achse außerhalb des das Lagerauge haltenden Teile des ersten Lagerbockes liegt, wobei diese Teile mit dem Fuß über eine Verstärkungsrippe oder Verstärkungssicke miteinander versteift sein können. Günstig ist es auch, wenn der Fuß des ersten Lagerbockes eine größere Axialerstreckung aufweist als die von diesem Fuß getragenen weiteren Teile und der Fuß außerhalb der von dem Fuß ausgehenden weiteren Teile angeordnete Befestigungseinrichtungen aufweist, insbesondere zwei derartige Befestigungseinrichtungen. Der Austauschbarkeit dienlich ist es, wenn die Befestigungseinrichtungen an einer solchen Stelle angeordnet sind, daß die zugehörigen Befestigungspunkte am Holm des Schrankkorpus mittig liegen.

Die Erfindung wird nachfolgend anhand von Ausführungsbeispielen näher erläutert, die in den Zeichnungen dargestellt sind.

Es zeigt:

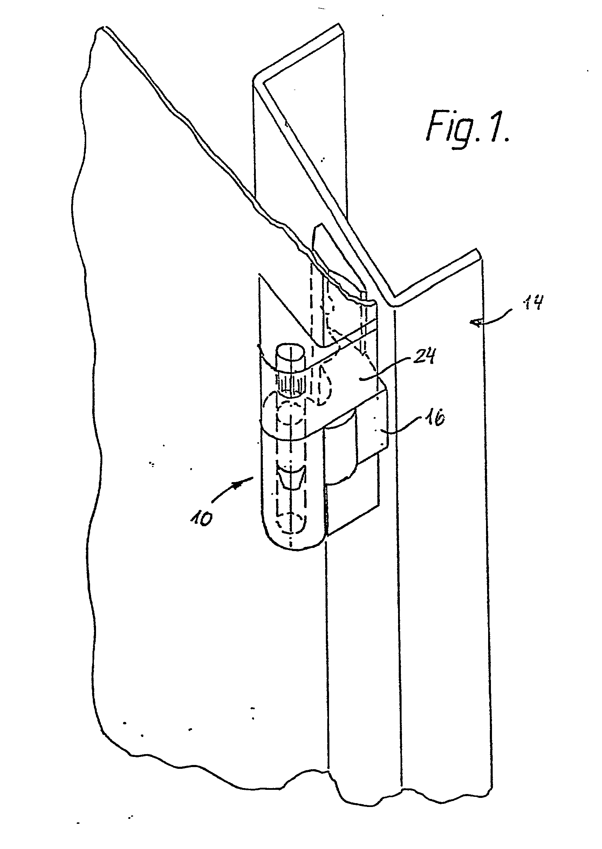

Fig. 1 in einer perspektivischen Darstellung eine Ausführungsform des erfindungsgemäßen 180°-Scharniers im eingehängten Zustand;

Fig. 2 in einer ähnlichen Darstellung wie Fig. 1 das Scharnier in ausgehängtem Zustand;

Fig. 3 die Ausklinkung im Türblatt, in der der zweite Bock montiert wird;

Fig. 4 in einer Seitenansicht eine Ausführungsform des erfindungsgemäßen Scharniers unter Anwendung eines Klemmstiftes;

Fig. 5 eine axiale Schnittansicht der Ausführungsform gemäß Fig. 4;

Fig. 6 eine ähnliche Ansicht wie Fig. 4, jedoch unter Verwendung von Stiftschrauben als Klemmstifteinrichtung;

Fig. 7 und 7a in einer Ansicht von oben den zweiten, U-förmigen Bock des in Fig. 4 dargestellten Scharniers in zwei Varianten;

Fig. 8, 9 und 10 Ansichten von rechts, oben und links auf den in Fig. 7 dargestellten Bock;

Fig. 11 eine Ansicht von unten;

Fig. 12 in einer ähnlichen Ansicht wie Fig. 7 in den zweiten U-förmigen Bock, hier jedoch zur Befestigung mittels Senkkopfschrauben;

Fig. 13 eine Ansicht ähnlich der Fig. 8, jedoch für die Ausführungsform gemäß Fig. 12;

Fig. 14 und 14a eine Ansicht von oben auf den ersten Bock des erfindungsgemäßen Scharniers gemäß Fig. 3 in zwei Varianten;

Fig. 15 den Bock der Fig 14 in einer Rückansicht;

Fig. 16 den Bock der Fig. 14 in einer teilweise geschnittenen Seitenansicht;

Fig. 17 eine Frontalansicht des Bockes gemäß Fig. 14;

Fig. 18 den in Fig. 4 benutzten Klemmstift als Einzelteil;

Fig. I9 den in Fig. 4 benutzten Lagerstift;

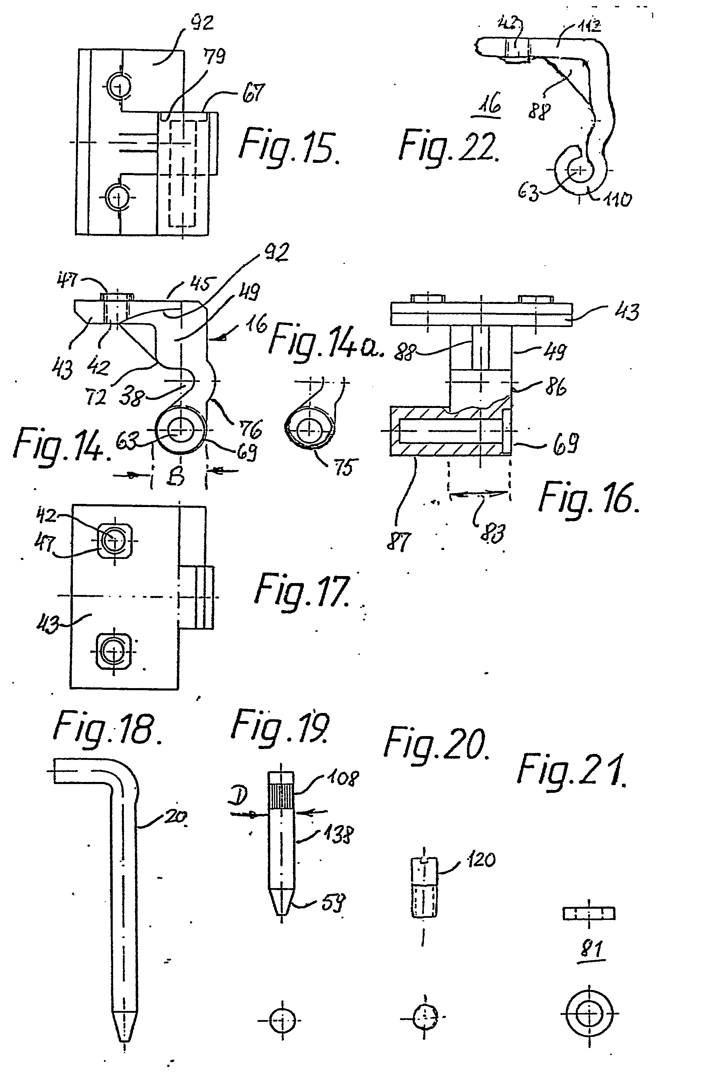

Fig. 20 die in Fig. 6 benutzten Stiftschrauben;

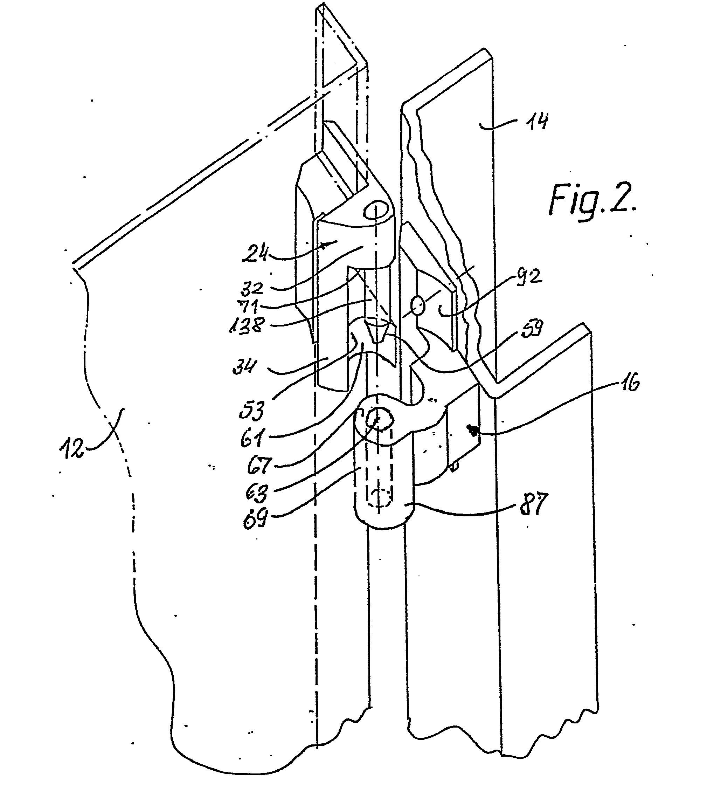

Fig. 2I den zur Verringerung der Reibung in den Fig. 4 und 6 erkennbaren Gleitring; und
Fig. 22 den ersten Bock als Stanzteil.

Im einzelnen zeigt Fig. I in einer perspektivischen Ansicht eine erste Ausführungsform des erfindungsgemäßen, von außen sichtbaren I80°-Scharniers, wobei das Scharnier I0 aus einem ersten, am Schrankgehäuse I4 mittels Schraubbolzen I3 (siehe Fig. 5) befestigten ersten Bock I6 und einem zweiten, den ersten Bock I6 umgreifenden U-förmigen, am Türblatt I2 mittels Klemmstifteinrichtung 20 (Fig. 4) oder I20 (Fig. 5) oder Schrauben (Fig. I2) befestigten zweiten Bock 24 besteht, wobei der zweite Bock 24 in einem im Abkantbereich 22 des Türblatts I2 angebrachten Ausklinkung I8 eingeschoben ist, wie die Fig. 3 und 5 beispielsweise erkennen lassen. Der zweite Bock 24 umschließt dabei die Ausklinkkanten 26, 28, wobei die Klemmstifteinrichtung, die in der Fig. 4 die Form eines Winkelstiftes besitzt, sich über die Breite der Ausklinkung I8 hinaus bis in die von der Abkantung 22 gebildeten Eckbereiche 30 hineinerstreckt und dadurch den zweiten Bock 24 in der Ausklinkung I8 festhält.

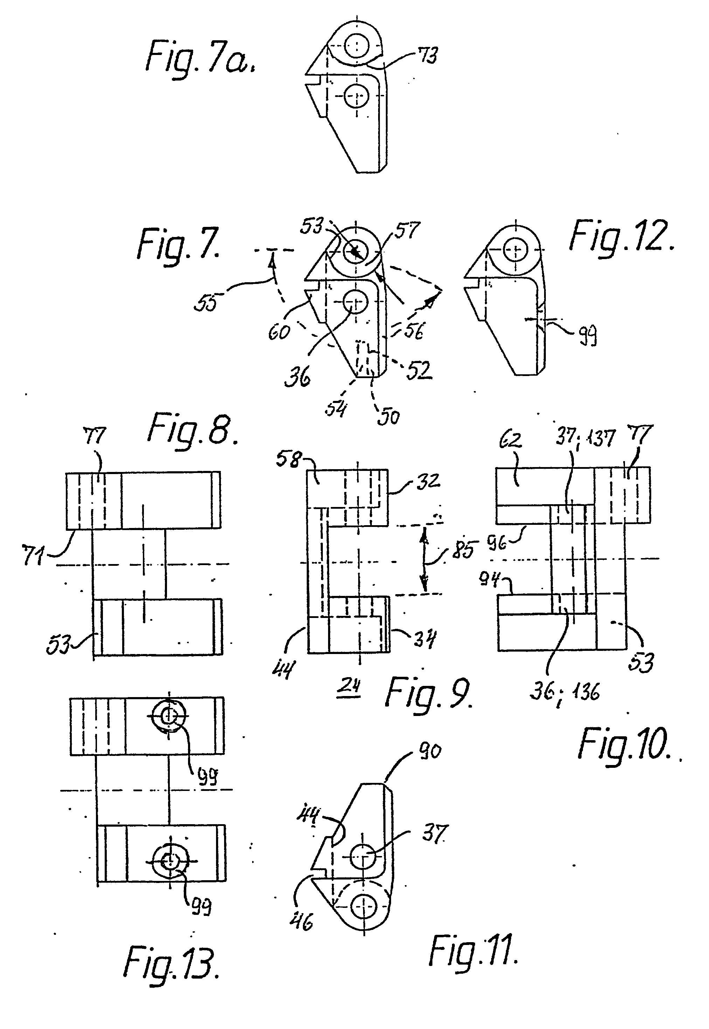

Der zweite Bock 24 besitzt, wie Fig. 4, insbesondere aber auch die Fig. 8, 9 und I0 erkennen lassen, U-Form, derart, daß er den ersten Bock I6, der auch in Fig. 4 sowie in den Fig. I4 bis I7 zu erkennen ist, gabelförmig mit nur geringem Axialspiel umschließt, wenn die Tür sich in geschlossener Stellung befindet. Der in Fig. 4 erkennbare Stift 20 durchdringt dabei die Bohrungen 36, 37 in den beiden Gabelzinken 32, 34 des U-förmigen zweiten Bockes 24 sowie einen dazu ausgerichteten Einschnitt 38 des ersten Bockes I6, siehe dazu die Fig. 7, 9, I0, II und I4.

Der erste Bock I6 ist dabei mittels einer Kopfschraube I3, die das Schrankgehäuse I4 durchstößt, entweder nahe der äußeren Seitenfläche 40 befestigt, oder aber, um eine universellere Montage zu ermöglichen, mittig bezüglich des vom Schaltschrankkorpus I4 gebildeten Holmes 4I angeordnet, wie die Fig. 5 erkennen läßt. Zu diesem Zweck weist der Bock I6 einen verlängerten Fuß 43 auf, der zwei Gewindebohrungen 42 zur Aufnahme von Schraubbolzen I3 besitzt. Zur genauen Stabilisierung kann, wie dargestellt, von der Auflagefläche 45 noch ein kreisförmiger oder, wie hier, rechteckig gestalteter Ausrichtvorsprung 47 ausgehen, siehe die Fig. I4 und I7.

Der zweite Bock besitzt zum Umschließen der senkrechten Türblattausklinkungskante 28 im Stegbereich 44 des U eine erste Nut 46 (Fig II) und zum Umschließen der waagerechten Türblattausklinkungskanten 26 bei Bedarf jeweils noch eine im Schenkelbereich 48 des U liegende zweite Nut 50 (Fig. 7), die aber auch fehlen kann. Die eine Seite 52 der zweiten optionalen Nut 50 wird dabei von dem stumpfen Ende eines in Aufschiebrichtung ansteigenden Keiles 54 gebildet, so daß das Teil 24 in die Ausklinkung I8 derart eingeschoben werden kann, daß während des Eindringens der Kante 28 in die Nut 46 die Kanten 28 der Ausklinkung I8 sich auf die beiden sich gegenüberliegenden keilartigen Vorsprünge 54 aufschieben, wobei die Schenkel des U-förmigen Teils 24 geringfügig zusammengedrückt werden, bis die Kanten 26 in die beiden Nuten 50 einrasten und sich dabei einerseits an die eine Seite der Nut, 52, andererseits an die überstehenden Seitenwände 56 des Bauteils 24 anlegen. Der zweite Bock 24 kann jetzt nicht mehr aus der Ausklinkung I8 ungewollt herausfallen, er kann andererseits durch Zusammendrücken der Schenkel jedoch wieder aus der Ausklinkung herausgenommen werden, falls dies zweckmäßig sein sollte. Der zweite Bock 24 ist dabei stets so gestaltet, daß er die Schnittkanten 26 der Ausklinkung I8 nach außen hin mit den vorspringenden Wandbereichen 58 überdeckt, während die Schnittkante 28 durch die erste Nut 46 bildende Leiste 60 überdeckt wird. Dies gilt für die Vorderfläche des Türblatts, während die abgeknickte Seitenfläche entsprechend durch den vorspringenden Wandbereich 62 (Fig. I0) bedeckt wird.

Die Fig. 5 läßt erkennen, daß das Scharnier I0 zum großen Teil in dem als Totraum geltendem Eckraum einer Schaltschrankblechtür untergebracht ist, welcher Eckraum aufgrund der zur Versteifung dienenden Abkantung am Türblatt und unter Umständen auch am Türrahmen vorhanden ist. Es ist auch zu erkennen, daß das Türblatt I2 nahezu die gleiche Größe erreicht, wie der Schrankkorpus I4, wobei die Scharnierseitenfläche 66 nur geringfügig, d. h. um I bis 3 mm gegenüber der Schrankgehäuseseitenfläche 40 zurückspringt. Die beiden Böcke, die um die Achse 68 zueinander verschwenkbar sind, sind so ausgestaltet, daß sich in der Schließstellung der Stegbereich 44 (Fig. II) des U-förmigen zweiten Bockes 24, der verhältnismäßig große Materialstärke besitzt, nahezu an die entsprechende Seitenfläche 72 (Fig. I4) des ersten Bockes I6 anlegt, wie aus Fig. 5 auch deutlich wird, siehe dort die Bezugszahl 74. Entsprechendes gilt für die um I80° verschwenkte Offenstellung, die in Fig. 5 gestrichelt dargestellt ist, in der der Stegbereich 44 (und zwar nahe der Nut 46) an die gegenüberliegende Seite 76 des ersten Bockes I6 nahezu anschlägt. Insofern bildet das erfindungsgemäße Scharnier gleichzeitig auch Anschläge für die beiden Extremstellungen der Tür I2, wobei die Anschläge zweckmäßigerweise etwas jenseits des Schwenkbereiches on I80° liegen.

Wie aus Fig. 5 zu erkennen ist, verschiebt sich die Ebene des Türblattes I2 beim Öffnen derart, daß das Türblatt im um I80° geöffneten Zustand um ein Maß A vom Schrankgehäuse weggerückt ist, so daß ein direkt neben dem dargestellten Schrank angeordneter, gestrichelt erkennbarer Schrank eine volle Öffnung des Türblattes I2 um I80° selbst dann zuläßt, wenn der Schrank gleichfalls die vorspringende Scharnierform - bei geschlossener Tür - aufweist. Erreicht wird dies dadurch, daß die Anordnung der Bohrung 68 und damit der Drehachse des Scharniers nicht nur außerhalb der von der Abkantung 22 des Türblatts I2 gebildeten Eckbereiches 30 (Fig. 3) liegt, sondern auch so, daß die Achse des Scharnierlagerbolzens I38 um ein Maß M vor der Türblattaußenfläche 78 liegt, welches der Entfernung N zwischen der Lagerbolzenachse und der parallel zur Türblattaußenfläche 78 liegenden Tangente 80 an das am weitesten vorspringende Lagerteil entspricht, siehe Fig. 5. Um dieses über die Tirblattaußenfläche 78 vorspringende Maß A (entspricht 2M) möglichst klein zu machen, kann gemäß den Ausführungen der eingangs genannten DE-OS 32 46 398 dieses Maß M kleiner gewählt werden, als es an sich der sonst gewählten halben Stellbreite B entspricht, siehe Fig. I4, die normalerweise, wie auch hier, erheblich größer, insbesondere doppelt so groß ist wie der Durchmesser D (Fig. I9) des Scharnierbolzens I38. Das Maß M läßt sich kleiner machen, indem der Mittelpunkt der Bohrung 68 aus der üblichen Lage, wie sie Fig. 5 wiedergibt, um ein Maß nach außen verschoben wird, das so gewählt wird, daß noch ausreichend Material zwischen der Bohrung 68 und der Stirnfläche, an der die Tangente 80 anliegt, verbleibt, so daß die Festigkeit möglichst wenig beeinträchtigt wird, siehe Bezugszahl 75 in Fig. I4a.

Durch eine solche Maßnahme würde sich das Maß A verkleinern, ohne daß dadurch die Verschwenkbarkeit um I80° bei Reihenschrankanordnung beeinträchtigt werden würde.

Um nun die eingangs erwähnte noch weiter vereinfachte Demontierbarkeit des Türblatts ohne umständliche Beseitigung von Klemmstiften oder Klemmschrauben oder ähnlichem zu erreichen, ist der eine U-Schenkel 34 des zweiten Lagerbocks 24 derart verkürzt, daß sein Ende 53 den vom anderen U-Schenkel 32 gehaltenen Lagerbolzen I38 über einen Kreisbogen, der in Fig. 2 oder auch in Fig. 7 etwas weniger als I80° beträgt und in Fig. 7 durch die Bezugszahl 55 gekennzeichnet ist, mit bestimmtem Radialabstand zur Lagerbolzenachse bzw. zum Lagerbolzenumfang, letzterer Abstand ist mit 57 bezeichnet, umschließt. Wie aus insbesondere der Fig. 2 hervorgeht, reicht der Lagerbolzen I38 mit seiner kegelstumpfartig zulaufenden Spitze 59 bis in diesen Endbereich 53 des Schenkels 34 hinein, läßt aber zweckmäßigerweise noch eine, gemäß Fig. 2 am unteren Ende des zweiten Bocks 24 liegende Innenkreisabschnittfläche 6I frei, so daß der in Fig. 2 noch getrennt vom zweiten Bock 24 liegende erste Bock I6 mit seinem das Lagerauge 63 enthaltenden Ansatz 69 unbehindert vom Lagerbolzen I38 in die halbkreisförmige Höhlung, die vom Ende 53 des U-Schenkels 34 gebildet wird, eingeschoben werden kann. In diesem Augenblick bildet dann die Fläche 6I des zweiten Lagerbocks 24 für den ersten Lagerbock I6 eine die Montage sehr stark erleichternde Fixierung. Insbesondere das gleichzeitige Ausrichten von mehreren derartigen Scharnieren, die an einem Blechschrank vorhanden sein mögen, wird dadurch sehr einfach. Nach Ausrichtung dieser Scharniere kann dann problemlos das Türblatt I2 bezüglich des Schrankkorpus I4 - beispielsweise durch das Eigengewicht des Türblattes I2 - so verschoben werden, daß der Lagerbolzen I38 nunmehr mit seiner das Einfädeln noch weiter erleichternden konischen Spitze 59 in das Lagerauge oder Bohrung 63 eindringen kann, bis die obere Endfläche 67 des das Lagerauge 63 ringförmig umschließenden und in dieser Stellung den Radialabstand 57 einnehmenden Ansatzes 69 gegen die Innenfläche 7I des

U-Schenkels 32 im Umfangbereich des Lagerbolzens I38 anliegt. Das bedeutet, daß der erste Lagerbock I6 im Bereich seines Lagerauges 63 einen Querschnitt besitzt, der in einer bestimmten, einer geöffneten Tür, wie in Fig. 2 dargestellt, entsprechenden Schwenkstellung bezüglich des zweiten Lagerbockes 24 ein Hindurchschieben durch den Radialabstand 57 erlaubt. Diese bestimmte Schwenkstellung kann einem Türöffnungswinkel von beispielsweise annähernd I80° entsprechen, wobei zur Erleichterung des Auffindens dieser Schwenkstellung ein größerer Bereich von beispielsweise I50...I90° oder auch I70... I80° vorgesehen sein kann. Mit dem in Fig. I4 dargestellten Beispiel für einen einen Kreisring bildenden Radialabstand 57 gemäß Fig. 7 ist ein verhältnismäßig großer Freigabebereich zu verwirklichen, beispielsweise würde er im dargestellten Beispiel von etwa I00° bis annähernd I80° reichen. Durch Änderung der Form lassen sich aber auch verkleinerte Freigabewinkelbereiche hinsichtlich des Türöffnungswinkels verwirklichen, beispielsweise dadurch, daß von der Kreisform abgewichen wird, wie in Verbindung mit den Fig. I4a und 7a bei der Bezugszahl 73 bzw. 75 zu erkennen ist. Der in Fig. 7a in Verbindung mit der Bezugszahl 73 erkennbare verengte Durchlaßraum für ein entsprechend schmäler geformter Bereich 75 (Fig. I4a) für den Lageraugenbereich des Ansatzes 69 ergibt z. B. einen Freigabetüröffnungswinkel von I70... I80°.

Der Lagerbolzen I38 wird zweckmäßigerweise in einer Durchgangsbohrung 77 oder, nicht dargestellt, einer entsprechenden Sackbohrung im unverkürzten U-Schenkel 32 des zweiten Lagerbocks 24 mit Presspassung gehalten, wobei zur Herstellung dieser Presspassung die Anordnung einer Riffelung I08 (Fig. I9) zweckmäßig sein kann.

Wie aus den Fig. I4, I5 und I6 hervorgeht, ist der erste Lagerbock I6 im Auflagebereich 67 seines Lagerauges 63 mit einer ringförmigen Einsenkung 79 versehen, in die ein Gleitring, beispielsweise ein entsprechender Kunststoffring 8I, wie in Fig. 2I dargetellt, eingelegt werden kann, wobei der Kunststoffring 8I eine etwas größere Dicke aufweist als es der Tiefe der ringförmigen Einsenkung 79 entspricht, so daß bei seinem Einlegen er etwas über die Ebene der Endfläche 67 hinausragt und dadurch die Innenflächen 7I des zweiten Lagerbockes nicht auf der metallischen Fläche 67 aufliegt, was zu Drehreibung führt, sondern stattdessen auf der wesentlich geringere Reibungswerte ergebenden Oberfläche des Kunststoffringes 8I. Durch eine gewisse Kompressibilität des Kunststoffringes 8I wird außerdem eine bessere Auflagedruckverteilung auf die mehreren Scharniere eines Türblattes erreicht.

Für die insoweit beschriebene grundsätzliche Funktion des aushängbaren I80°-Scharniers für Schaltschränke genügt ein erster Lagerbock, der aus dem bereits geschilderten Fuß 43 - der verbreitert sein kann, wie in Fig. 5 zu erkennen -, einem von dem Fuß ausgehenden Rumpf 49 mit einer Breite 83, die in den von den beiden U-Schenkeln 32, 34 gebildeten Abstand 85 (Fig. 9) paßt, sowie einem vom Rumpf 49 ausgehenden, zur Aufnahme des Klemmstiftes 20 gekrümmt geformten und einen Einschnitt 38 bildenden Hals 86, ebenfalls der Breite 83, und einen vom Hals getragenen, das Lagerauge 63 bildenden Ansatz oder Kopf 69, wiederum von der Breite 83 besteht. Tatsächlich besitzt aber die dargestellte Ausführungsform einen nach "unten" hin verlängerten Kopf 69, wobei diese Verlängerung 87 die Möglichkeit eröffnet, den Lagerbolzen I38 hinsichtlich seines unteren Endes vollständig zu umschließen. Dies hat zum einen optische Vorteile, weil dadurch das Scharnier ein symmetrisches Aussehen erhält, indem der Verkürzungsbereich des verkürzten Schenkels 34 des zweiten Lagerbockes 24 optisch ausgefüllt wird durch den Ansatz 87. Ein technischer Vorteil ergibt sich dadurch, daß der Lagerbolzen I38 in seiner gesamten Länge - bis auf die konische Spitze 59 - in der Bohrung des Lagerauges 63 geführt wird. Bei richtiger maßlicher Abstimmung zwischen der Innenkreisabschnittsfläche 61 des zweiten Bockes und dem Ansatz 87 stabilisiert sich zudem die Türlagerung, und selbst bei entferntem Lagerbolzen I38 behält die Tür ihre einwandfreie Fixierung. Ein weiterer technischer Vorteil ist der, daß die Bohrung des Lagerauges 63 als Sackbohrung ausführbar ist, die nach oben hin offen ist und dadurch einen geeigneten Vorratsraum für Schmierflüssigkeit bildet. Zudem kann dann auch der Stift nicht unbefugt herausgeschlagen werden.

Die Fig. I4, I5 und I6 lassen außerdem erkennen, daß der Rumpf 49 noch durch eine Verstärkungsrippe 88 verstärkt sein kann, was bei der hier weit ausladenden Fußerstreckung 43 günstig ist.

Um für die beim Schließen der Tür einschwenkenden Enden 90 im Bereich des verbreiteten Fußes 43 Platz zu schaffen, ist eine kreisbogenförmige Einsenkung im Fuß vorgesehen, siehe Bezugszahl 92. Besitzt der Fuß nur die Breite des Rumpfes 49, nämlich die Breite 83, entfiele diese Maßnahme.

Der gebogene Hals 86 mit seinem dadurch gebildeten Einschnitt 38 kann durch einen graden Hals ohne diesen Einschnitt 38 ersetzt werden, falls anstelle des Klemmstiftes 20 stiftförmige Klemmschrauben I20 benutzt werden, siehe die Einzelteildarstellung der Fig. 20 sowie die in Fig. 6 dargestellte Ausführungsform. Da diese stiftförmigen Klemmschrauben I20 so ausgeführt sein können, daß sie in entsprechende Gewindebohrungen I36, I37 (siehe Fig. I0) derart einschraubbar sind, daß sie die Ebenen der inneren Flächen 94, 96 der beiden U-Schenkel 34, 32 nicht überschreiten, wird die Bewegung des ersten Bockes I6 auch dann nicht mehr behindert, falls der Einschnitt 38 nicht vorhanden ist.

Anstelle des Klemmstiftes 20 bzw. der Klemmschrauben I20 kann die Befestigung des zweiten U-förmigen Bockes 24 in der Türblattausklinkung I8 auch mittels durch das Blech des Türblatts I2 durchgeführter (siehe entsprechend angedeutete Gewindebohrungen 98 in Fig. 3), Kopfschrauben erfolgten, beispielsweise mittels hier nicht dargestellter Senkkopfschrauben, die durch entsprechende eingesenkte Bohrungen 99 (siehe Fig. I2 und I3) hindurchgesteckt sind. In diesem Falle kann natürlich der Durchbruch 36, der bei Anwendung eines Klemmstiftes 20 glatt wäre und bei Verwendung von Klemmschrauben ein Innengewinde aufweisen würde, auch entfallen, wie in Fig. I2 erkennbar ist.

Die Lagerteile, insbesondere erster und zweiter Lagerbock I6, 24 sind vorzugsweise aus einem passenden Metall gegossen, beispielsweise aus Zinkdruckguß während die Stifte und Stiftschrauben (Madenschrauben) aus Rundstahl hergestellt sein können.

Bei geringeren Festigkeitsanforderungen, wie sie beispielsweise für sogenannte Motorkontrollzentren (MCC) gegeben sind, kann zur Kosteneinsparung der zweite Lagerbock 24 auch aus einem zähen Kunststoff gespritzt sein (wodurch dann der Gleitring 81 entfallen könnte), während der erste Lagerbock I6 aus einem Blechstanzteil gefertigt wäre, siehe Fig. 22, bei dem die Lagerbohrung 63 durch eine Blechrolle II0, und die Auflagefläche 45 von einer Blechabwinkelung II2 gebildet wird, in die eine Tülle mit einem Gewinde 42 eingezogen ist. Handelt es sich um Stahlblech mit einer Dicke von 2,5....3 mm, ergibt sich auch ausreichende Festigkeit, insbesondere dann, wenn noch eine Sicke 88 zur Versteifung des von dem Bauteil gebildeten Winkels vorgesehen wird. Wird stärkeres Stahlmaterial als Ausgangsmaterial für den Stanzvorgang benutzt, könnten die geeigneten Maße durch Materialwegpressung erlangt werden.

Statt der Gewindetülle kann auch ein Gewindestift in die Bohrung 42 gemäß Fig. 22 fest eingepreßt werden, oder, falls die Bohrung 42 eine Gewindebohrung ist, eingeschraubt werden.

## Patentansprüche

I. Außen sichtbares I80°-Scharnier für Schaltschränke, bestehend aus einem ersten, am Schrankgehäuse (I4) befestigten Lagerbock (I6) und einem zweiten, den ersten Lagerbock (I6) umgreifenden, U-förmigen, zwei U-Schenkel (32, 34) aufweisenden, am Türblatt (I2) verschraubten oder mittels einer Klemmstifteinrichtung (20; I20) befestigten Lagerbock (24), wobei der zweite Lagerbock (24) in eine im Abkantbereich (22) des Türblatts angebrachte Ausklinkung (I8) eingeschoben ist und dabei die Ausklinkungskanten (26, 28) umschließt, und wobei die durch einen Lagerbolzen (138) gebildete Drehachse des Scharniers (I0) außerhalb des von der Abkantung (22) des Türblatts (I2) gebildeten Eckbereichs (30) liegt, dadurch gekennzeichnet, daß der eine U-Schenkel (34) des U-förmigen zweiten Lagerbocks (24) derart verkürzt ist, daß sein Ende (53) den vom anderen U-Schenkel (32) gehaltenen Lagerbolzen (138) über einen bestimmten Drehwinkel (55) mit konstantem oder veränderlichem Radialabstand (57) zum Lagerbolzen (138) umschließt, und daß der erste Lagerbock (I6) im Bereich seines Lagerauges (63) einen den Lagerbolzen (138) ringförmig umschließenden, in dem Radialabstand angeordneten Ansatz (69) bildet.

2. I80°-Scharnier nach Anspruch I, dadurch gekennzeichnet, daß der erste Lagerbock (I6) im Bereich seines Lagerauges (63) einen Querschnitt (z. B. 75) aufweist, der in einer bestimmten, einer geöffneten Tür entsprechenden Schwenkstellung bezüglich des zweiten Lagerbockes (24) ein Hindurchschieben dieses Querschnitts (75) durch den vom ggf. in Schwenkrichtung veränderlichen Radialabstand gebildeten Raum erlaubt.

3. 180°-Scharnier nach Anspruch 2, dadurch gekennzeichnet, daß die bestimmte Schwenkstellung der Tür einem Türöffnungswinkel von nahezu 180°, vorzugsweise 150...190°, insbesondere 170...180° entspricht, oder aber einem Türöffnungswinkel von nahe 100°, vorzugsweise 80 bis 120°, insbesondere 90 bis 100°.

4. 180° -Scharnier nach einem der Ansprüche I bis 3, dadurch gekennzeichnet, daß der verkürzte U-Schenkel (34) des Lagerbockes (24) der bei fertiger Montage der untere Schenkel ist.

5. 180°-Scharnier nach einem der Ansprüche I bis 4, dadurch gekennzeichnet, daß der Lagerbolzen (138) in einer Durchgangsbohrung (77) oder Sackbohrung des unverkürzten U-Schenkels (32) des zweiten Lagerbockes (24) mit Presspassung gehalten ist und an seinem freien Ende kegelstumpfförmig (59) ausläuft.

6. 180°-Scharnier nach Anspruch 5, dadurch gekennzeichnet, daß der Lagerbolzen (138) eine solche Länge besitzt, daß er mit seinem freien Ende (59) noch innerhalb des verkürzten U-Schenkelbereiches (34) endet und dadurch eine Vorfixierungsfläche (6I) freiläßt.

7. 180°-Scharnier nach einem der Ansprüche I bis 6, dadurch gekennzeichnet, daß der erste Lagerbock (16) im Auflagebereich (67) seines das Lagerauge (63) aufweisenden Ansatzes (69) eine ringförmige Einsenkung (79) zur Aufnahme eines Gleitringes (8I), beispielsweise aus Kunststoff, zur Verminderung der Reibung zwischen erstem und zweitem Lagerbock (I6, 24) aufweist.

8. 180°-Scharnier nach einem der Ansprüche I bis 7, dadurch gekennzeichnet, daß der erste Lagerbock einen das freie Ende (59) des Lagerbolzens (138) umschließenden Fortsatz (87) bildet, der in Betriebstellung der Scharnierteile den durch die Verkürzung des verkürzten U-Schenkels (34) des zweiten Bockes (24) freigebliebenen Raum im wesentlichen ausfüllt.

9. 180°-Scharnier nach einem der Ansprüche I bis 8, dadurch gekennzeichnet, daß der zweite Lagerbock mittels durch das Blech des Türblatts (hindurchgeführter (98) Kopfschrauben in der Ausklinkung (I8) befestigt ist.

I0. 180°-Scharnier nach einem der Ansprüche I bis 8, wobei eine das Scharnier (I0) durchdringende Klemmstifteinrichtung vorgesehen ist, die sich über den Ausklinkungsbereichen hinaus in die von der Abkantung (22) gebildeten Eckbereiche (30) hineinerstreckt und dadurch den zweiten Bock (24) in der Ausklinkung (I8) festhält, dadurch gekennzeichnet, daß Klemmstifteinrichtung zwei Stiftschrauben (I20) vorgesehen sind, die in mit Gewinde versehene Bohrungen (I36, I37) in den U-Schenkeln (34, 32) des zweiten Lagerbockes (24) eingeschraubt sind.

II. 180°-Scharnier nach einem der Ansprüche I bis I0, dadurch gekennzeichnet, daß der erste Lagerbock (I6) ein Blechstanzteil ist, bei dem die Lagerbohrung (63) durch eine Blechrolle (II0) und die Befestigungsfläche (45) des Lagerbockes von einer Blechabwinkelung (II2) gebildet wird, in die ein Gewinde (42) eingeschnitten oder eingepreßt ist oder die einen in eine entsprechende ggf. mit Gewinde versehene Bohrung (42) versehenen Gewindebolzen trägt.

I2. 180°-Scharnier nach Anspruch II, dadurch gekennzeichnet, daß der zugehörige zweite Lagerbock (24) aus Kunststoff gespritzt ist.

I3. 180°-Scharnier nach einem der Ansprüche I bis I2, dadurch gekennzeichnet, daß der erste Lagerbock (I6) einen Fuß (43) aufweist, der am Schrankkorpus (I4) mittels einer Befestigungseinrichtung (42, 47) befestigbar ist, deren Achse außerhalb des das Lagerauge (63) haltenden Teile (49, 86, 69) des ersten Lagerbockes (I6) liegt, und daß diese Teile (insbesondere 49) mit dem Fuß (43) über eine Verstärkungsrippe oder Verstärkungssicke (88) miteinander versteift sind.

I4. 180° -Scharnier nach einem der Ansprüche I bis I3, dadurch gekennzeichnet, daß der Fuß (43) des ersten Lagerbockes (I6) eine größere Axialerstreckung aufweist als die von diesem Fuß (43) getragenen weiteren Teile (49, 86, 69), und daß der Fuß (43) außerhalb der von dem Fuß ausgehenden weiteren Teile (z B. 49) angeordnete Befestigungseinrichtungen (42, 47) aufweist, insbesondere zwei derartige Befestigungseinrichtungen.

I5. 180°-Scharnier nach Anspruch I4, dadurch gekennzeichnet, daß die Befestigungseinrichtungen an einer solchen Stelle angeordnet sind, daß die zugehörigen Befestigungspunkte am Holm (4I) des Schrankkorpus (I4) mittig liegen.

**Revendications**

Charnière visible de l'extérieur à ouverture de 180° destinée à des armoires de commande, constituée par une première selle d'appui (16) solidaire de la carrosserie de l'armoire (14) et par une deuxième selle d'appui (24) enveloppant la première selle d'appui (16), presentant une forme en U comportant deux montants de U (32, 34) et vissée au panneau de porte (12) ou fixée à celui-ci à l'aide d'un dispositif à tige de serrage (20; 120), la deuxième selle d'appui (24) étant introduite dans une entaille (18) pratiquée dans la zone d'angle (22) du panneau de porte et enveloppant les arêtes (26, 28) de l'entaille, l'axe de pivotement de la charnière (10) constitué par une broche (138) étant disposé en dehors de la zone d'angle (30) constitué par l'angle de pli (22) du panneau de porte (12), caractérisée en ce que le premier montant de U (34) de la deuxième selle d'appui en forme d'U (24) est raccourci de manière telle que son extrémité (53) entoure la broche (138) maintenue par l'autre montant de U (32) sur un certain angle (55), à une distance radiale (57) constante ou variable par rapport à la broche (138), et en ce que la première selle d'appui (16) forme une pièce rapportée (69) qui enveloppe la broche (138) à la manière d'une bague et qui est agencée à la distance radiale, dans la zone de son oeillet (63).

Charnière à ouverture de 180° selon la revendication 1, caractérisée en ce que la première selle d'appui (16) présente, dans la zone de son oeillet (63), une section (par exemple 75) qui permet le passage de celui-ci à travers l'espace formé par la distance radiale éventuellement variable dans la direction de pivotement, dans une position de pivotement déterminée par rapport à la deuxième selle d'appui (24), correspondant à une porte ouverte.

3. Charnière à ouverture de 180° selon la revendication 2 caractérisée en ce que la position de pivotement déterminée de la porte correspond à un angle d'ouverture de porte d'environ 180°, de préférence 150...190°, tout particulièrement 170...180° ou à un angle d'ouverture d'environ 100°, de préférence 80 à 120°, plus particulièrement 90 à 100°.

4. Charnière à ouverture de 180° selon l'une quelconque des revendications 1 à 3 caractérisée en ce que le montant raccourci (34) de la selle d'appui (24) correspond au montant inférieur à l'état de montage terminé.

5. Charnière à ouverture de 180° selon l'une quelconque des revendications 1 à 4 caractérisée en ce que la broche (138) est maintenue dans un perçage (77) ou trou borgne du montant (32) non raccourci de la deuxième selle d'appui (24) par un ajustement serré et présente une extrémité libre en forme de tronc de cône (59).

6. Charnière à ouverture de 180° selon la revendication 5 caractérisée en ce que la broche (138) présente une longueur telle que son extrémité (59) s'étend à l'intérieur de la zone du montant de U raccourci (34) et libère ainsi une surface de fixation préalable (61).

7. Charnière à ouverture de 180° selon l'une quelconque des revendications 1 à 6 caractérisée en ce que la première selle d'appui (16) comporte, dans la zone d'appui (67) de la pièce rapportée (69) munie de l'œillet (63), un évidement annulaire (79) destiné au logement d'une bague de glissement (81), par exemple en matière synthétique, en vue de la réduction du frottement entre la première et la deuxième selle d'appui (16, 24)

8. Charnière à ouverture de 180° selon l'une quelconque des revendications 1 à 7 caractérisée en ce que la première selle d'appui forme un prolongement (87) qui entoure l'extrémité libre (59) de la broche (138) et qui remplit en fonctionnement des éléments essentiellement l'espace libéré par le raccourcissement du montant de U (34) raccourci de la deuxième selle d'appui (24).

9. Charnière à ouverture de 180° selon l'une quelconque des revendications 1 à 8 caractérisée en ce que la deuxième selle d'appui est fixée dans l'entaille (18) à l'aide de vis à tête menées à travers (98) la feuille métallique du panneau de porte.

10. Charnière à ouverture de 180° selon l'une quelconque des revendications 1 à 8 comportant un dispositif à tige de serrage traversant la charnière (10), qui s'étend au-delà des zones d'évidement dans les zones d'angle (30) constituées par l'angle de pli (22) et maintient ainsi la deuxième selle d'appui (24) dans l'évidement (18), caractérisée en ce que le dispositif à tige de serrage comporte deux vis sans tête (120) qui sont vissées dans des alésages (136, 137) filetés pratiqués dans les montants de U (34, 32) de la deuxième selle d'appui (24).

11. Charnière à ouverture de 180° selon l'une quelconque des revendications 1 à 10 caractérisée en ce que la première selle d'appui (16) consiste en une pièce découpée dans une feuille métallique, l'alésage de pivotement (63) étant formé par un enroulement de feuille métallique (110) et la surface de fixation (45) de la selle d'appui étant formée par un pliage de feuille métallique (112) dans laquelle on a taraudé ou pressé un filet (42) ou qui porte une tige filetée fixée dans un perçage (42) correspondant éventuellement fileté.

12. Charnière à ouverture de 180° selon la revendication 11 caractérisée en ce que la deuxième selle d'appui (24) est une pièce en matière synthétique injectée.

13. Charnière à ouverture de 180° selon l'une quelconque des revendications 1 à 12 caractérisée en ce que la première selle d'appui (16) comporte un pied (43) qui est fixable au corps de l'armoire (14) à l'aide d'un moyen de fixation (42, 47) dont l'axe est situé en dehors des parties (49, 86, 69) de la première selle d'appui (16), qui tiennent l'œillet de pivotement (63), et en ce que ces parties (particulièrement 49) sont renforcées en même temps que le pied (43) par une nervure ou moulure de renforcement (88)

14. Charnière à ouverture de 180° selon l'une quelconque des revendications 1 à 13 caractérisée en ce que le pied (43) de la première selle d'appui (16) présente une dimension axiale plus grande que les autres parties (49, 86, 69) portées par ce pied (43) et en ce que le pied (43) comporte, en dehors des autres parties partant du pied (par exemple 49), des moyens de fixation (42, 47), plus particulièrement deux de ces moyens de fixation.

15. Charnière à ouverture de 180° selon la revendication 14 caractérisée en ce que les moyens de fixation sont disposés à un endroit tel que les points de fixation correspondants au montant (41) du corps de l'armoire (14) sont disposés au milieu de celui-ci (41).

## Claims

1. Externally visible 180 degree hinge for switch boxes comprising a first bearing block (16) attached to the box casing (14) and a second bearing block (24) which surrounds the first bearing block (16), is U-shaped, has two U-limbs (32, 34) and is bolted to the door leaf (12) or attached by means of a clamping device (20, 120), the second bearing block (24) being inserted into a recess (18) in an edge area (22) of the door leaf thereby surrounding the recess edges (26, 28), the axis of rotation of the hinge (10) formed by a bearing bolt (138) thus being outside the corner (30) of door leaf (12) formed by the recess (22), characterised in that one of the U-limbs (34) of the U-shaped second bearing block (24) is shortened in such a way that its end (53) surrounds the bearing bolt – (138) held by the other U-limb (32) over a certain angle of rotation (55) at a constant or changeable radial distance (57) from bearing bolt (138), and in that the first bearing block (16) forms an attachment (69) at its bearing eye (63) which annularly surrounds the bearing block (138) at a radial distance.

2. 180 degree hinge according to claim 1 characterised in that the first bearing block (16) has a cross section (e.g. 75) in its bearing eye (63) which in a certain position with regard to the second bearing block (24), corresponding to an open door, allows this cross section to be pushed through the space formed by the radial distance which may be variable in the direction of swing.

3. 180 degree hinge according to claim 2 characterised in that the particular pivot position of the door corresponds to a door opening angle of almost 180 degrees, preferably 150–190 degrees, and especially 170–180 degrees, or a door opening angle of almost 100 degrees, preferably 80–120 degrees, especially 90–100 degrees.

4. 180 degree hinge according to any one of claims 1 to 3, characterised in that the shortened U-limb (34) of the bearing block (24) is the lower limb when assembled.

5. 180 degree hinge according to any one of claims 1 to 4, characterised in that the bearing bolt (138) is held in a through boring (77) or pocket boring in the unshortened U-limb (32) of the second bearing block (24) by means of press fitting and is in the shape of a truncated cone (59) at its free end.

6. 180 degree hinge according to claim 5 characterised in that the bearing bolt (138) is of such a length so that its free end (59) still terminates within the shortened U-limb (34) and thus leaves a preliminary fixing surface (61) free.

7. 180 degree hinge according to any one of claims 1 to 6, characterised in that the first bearing block (16) in the support area (67) of its attachment (69) having the bearing eye (63), has an annular recess (79) for accommodating a sliding ring (81), made, for example, of plastic, for reducing friction between the first and second bearing blocks (16, 24).

8. 180 degree hinge according to any one of claims 1 to 7, characterised in that the first bearing block forms an extension (87) surrounding the free end (59) of the bearing bolt (138), the extension essentially filling the free space left by shortening of the shortened U-limb (34) of the second block (24) when the hinge components are in operation.

9. 180 degree hinge according to any one of claims 1 to 8, characterised in that the second bearing block is attached in recess (18) by means of cap screws through the metal of the door leaf (98).

10. 180 degree hinge according to one of claims 1 to 8 whereby a clamping bolt arrangement penetrating through the hinge (10) is provided, which extends from the recess area into the corner area (30) formed by edge (22) and thus firmly holds the second block (24) in the recess (18), characterised in that the clamping bolt arrangement is provided with two locking screws (120) which are screwed into threaded borings (136, 137) in the U-limbs (34, 32) of the second bearing block (24).

11. 180 degree hinge according to any one of claims 1 to 10, characterised in that the first bearing block is a stamping component in which the bearing boring (63) is formed by a metal roll (110) and the fixing surface (45) of the bearing block by a metal angle (112), into which a thread (42) is cut or pressed or which has a threaded bolt in a corresponding threaded boring (42).

12. 180 degree hinge according to claim 11, characterised in that the corresponding second bearing block (24) is moulded from plastic.

13. 180 degree hinge according to any one of claims 1 to 12, characterised in that the first bearing block (16) has a foot (43) which can be fixed to the casing body (14) by means of a fixing device (42, 47), the axis of which lies outside the parts (49, 86, 69) of first bearing block (16) holding the bearing eye (63), and that these parts (particularly 49) with the foot are strengthened by means of a strengthening rib or bead (88).

14. 180 degree hinge according to one of claims 1 to 13, characterised in that the foot (43) of the first bearing block (16) has a greater axial extent than the other parts (49, 86, 69) supported by this foot (43) and that the foot (43) has, outside the other parts (e.g. 49) of the foot, fixing arrangements (42, 47) more particularly two fixing arrangements.

15. 180 degree hinge according to claim 14, characterised in that the fixing arrangements are arranged at such a point that the corresponding fixing points on the spar (41) of the casing body (14) lie centrally.

Fig.1.

Fig.2.

14

24

32
71
138

92

34

59

53

61

16

67

63

69

87

12

Fig.6.  Fig.4.

Fig.3.

Fig.5

Fig. 7a.

Fig. 7.

Fig. 12.

Fig. 8.

Fig. 9.

Fig. 10.

Fig. 13.

Fig. 11.

Fig. 15.

Fig. 22.

Fig. 14a.

Fig. 14.

Fig. 16.

Fig. 17.

Fig. 18.

Fig. 19.

Fig. 20.

Fig. 21.